# EUROPEAN PATENT APPLICATION

(11) **EP 4 593 115 A1**
(43) Date of publication of application: **30.07.2025**
(21) Application number: 25153758.5
(22) Date of filing: 24.01.2025
(51) Int. Cl.: H01M 4/505, H01M 4/525, H01M 4/04, H01M 4/131, H01M 4/1391, H01M 4/36, C01G 53/50

(54) **POSITIVE ELECTRODE ACTIVE MATERIALS, PREPARATION METHODS THEREOF, POSITIVE ELECTRODES, AND RECHARGEABLE LITHIUM BATTERIES**

(30) Priority: 24.01.2024 KR 20240010867; 22.01.2025 KR 20250009671
(71) Applicant: SAMSUNG SDI CO., LTD., Yongin-si, Gyeonggi-do 17084 (KR)
(72) Inventor: YOON, Jaesang, 17084 Yongin-si (KR); KIM, Young-Ki, 17084 Yongin-si (KR); KONG, Youngsun, 17084 Yongin-si (KR); CHOO, Sung Ho, 17084 Yongin-si (KR); KANG, Seok Mun, 17084 Yongin-si (KR); JUN, Dowook, 17084 Yongin-si (KR); KANG, Byungwuk, 17084 Yongin-si (KR); JEONG, Jaeyong, 17084 Yongin-si (KR); KANG, Gwiwoon, 17084 Yongin-si (KR); DOO, Sungwook, 17084 Yongin-si (KR)
(74) Representative: Marks & Clerk LLP

(57) **Abstract**

Provided is a positive electrode active material including core particles including zirconium-doped layered lithium nickel-manganese-aluminium-based composite oxide, wherein the core particle is a secondary particle formed by agglomerating a plurality of primary particles, an average particle diameter (D50) of the secondary particles is about 10 µm to about 25 µm, and in the zirconium-doped layered lithium nickel-manganese-aluminium-based composite oxide, a zirconium content is about 0.2 mol% to about 0.8 mol% based on 100 mol% of a total metal excluding lithium. The positive electrode active material according to some embodiments may maximize capacity, while minimizing a production cost, to ensure long cycle-life characteristics and improve high-voltage characteristics and high-temperature characteristics. If the positive electrode active material is applied to a rechargeable lithium battery, high initial charge/discharge capacity and efficiency may be achieved under high-voltage operating conditions, and long cycle-life characteristics may be realized under high-voltage and high-temperature conditions.

## Description

### BACKGROUND

### 1. Field

Positive electrode active materials, preparation methods thereof, positive electrodes including the same, and rechargeable lithium batteries are disclosed.

### 2. Description of the Related Art

A portable information device such as a cell phone, a laptop, smart phone, and/or the like and/or an electric vehicle has used a rechargeable lithium battery having high energy density and easy portability as a driving power source. Recently, research has been actively conducted to use a rechargeable lithium battery having high energy density as a driving power source and/or power storage power source for hybrid and/or electric vehicles.

Various positive electrode active materials have been investigated to realize rechargeable lithium batteries for applications to various uses. Among them, lithium nickel-based oxide, lithium nickel manganese cobalt-based composite oxide, lithium nickel cobalt aluminium-based composite oxide, and lithium cobalt-based oxide are mainly used as positive electrode active materials. However, while interest in large-sized, high-capacity, and/or high-energy-density rechargeable lithium batteries have recently increased rapidly, the supply of positive electrode active materials including cobalt, a rare metal, is expected to be severely insufficient. In other words, because cobalt is expensive and there are not many remaining reserves, there is a need to develop positive electrode active materials that exclude cobalt or reduce its content.

### SUMMARY

Some embodiments of the present disclosure provide a positive electrode active material including a zirconium-doped layered lithium nickel-manganese-aluminium-based composite oxide having economic feasibility, high capacity, and long cycle-life characteristics, and improved high-voltage and high-temperature characteristics, a preparation method thereof, and a positive electrode and a rechargeable lithium battery including the same.

In some embodiments, a positive electrode active material includes core particles including a zirconium-doped layered lithium nickel-manganese-aluminium-based composite oxide wherein each of the core particles is a secondary particle formed by agglomerating a plurality of primary particles, an average particle diameter (D₅₀) of the secondary particles is about 10 µm to about 25 µm, and in the zirconium-doped layered lithium nickel-manganese-aluminium-based composite oxide, a zirconium content is about 0.2 mol% to about 0.8 mol% based on 100 mol% of a total metal excluding lithium in the zirconium-doped layered lithium nickel-manganese-aluminium-based composite oxide.

In some embodiments, a method of preparing a positive electrode active material includes mixing together a nickel-manganese-aluminium-based composite hydroxide, a zirconium raw material, and a lithium raw material and performing a heat treatment, to obtain a zirconium-doped layered lithium nickel-manganese-aluminium-based composite oxide, wherein a zirconium content of the zirconium raw material is about 0.2 mol% to about 0.8 mol%, based on 100 mol% of a total metal of the nickel-manganese-aluminium-based composite hydroxide and zirconium of the zirconium raw material.

In some embodiments, a positive electrode includes a positive electrode current collector and a positive electrode active material layer on the positive electrode current collector, wherein the positive electrode active material layer includes the aforementioned positive electrode active material.

Some embodiments provide a rechargeable lithium battery including the positive electrode, a negative electrode, and an electrolyte.

At least some of the above and other features of the invention are set out in the claims.

The positive electrode active material according to some embodiments may maximize or increase capacity, while minimizing or reducing a production cost, to ensure long cycle-life characteristics and improve high-voltage characteristics and high-temperature characteristics. If the positive electrode active material is applied to a rechargeable lithium battery, high initial charge/discharge capacity and efficiency may be achieved under high-voltage operating conditions, and long cycle-life characteristics may be realized under high-voltage and high-temperature conditions.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a schematic diagram showing a rechargeable lithium battery according to some embodiments.
FIG. 2 is a cross-sectional view schematically showing a rechargeable lithium battery according to some embodiments.
FIGS. 3-4 are schematic diagrams showing rechargeable lithium batteries according to some embodiments.
FIG. 5 is a SEM-EDS image of a surface of a final positive electrode active material prepared in Example 1.
FIGS. 6-7 are SEM images of the surface of the positive electrode active material prepared in Example 1.
FIGS. 8-9 are SEM images of a surface of a positive electrode active material prepared in Example 2.

### DETAILED DESCRIPTION

Hereinafter, example embodiments will be described in more detail so that those of ordinary skill in the art can easily implement them. However, the subject matter of this disclosure may be embodied in many different forms and should not be construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It will be understood that if an element such as a layer, film, region, or substrate is referred to as being "on" another element, it can be directly on the other element or intervening elements may also be present. In contrast, if an element is referred to as being "directly on" another element, there are no intervening elements present.

"Layer" herein includes not only a shape on a whole surface if viewed from a plan view, but also a shape on a partial surface.

The average particle diameter may be measured by any suitable method generally used in the art, for example, by a particle size analyzer, and/or by a transmission electron microscope image and/or a scanning electron microscope image. In embodiments, it is possible to obtain an average particle diameter value by measuring using a dynamic light scattering method, performing data analysis, counting the number of particles for each particle size range, and calculating from this. Unless otherwise defined, the average particle diameter (D₅₀) may mean the diameter of particles having a cumulative volume of 50 volume% in the particle size distribution. As used herein, if a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and/or the like.

"Metal" is interpreted as a concept including ordinary metals, transition metals and metalloids (semi-metals).

### Positive Electrode Active Material

In some embodiments, a positive electrode active material includes core particles including a zirconium-doped layered lithium nickel-manganese-aluminium-based composite oxide, wherein the core particle is a secondary particle formed by agglomerating a plurality of primary particles, an average particle diameter (D50) of the secondary particles is about 10 µm to about 25 µm, and in the zirconium-doped layered lithium nickel-manganese-aluminium-based composite oxide, a zirconium content is about 0.2 mol% to about 0.8 mol% based on 100 mol% of a total metal excluding lithium in the zirconium-doped layered lithium nickel-manganese-aluminium-based composite oxide.

As the price of cobalt, a rare metal, has recently risen sharply, there is an interest in the development of positive electrode active materials that exclude cobalt or reduce its content. Among which a positive electrode active material having an olivine crystal structure such as lithium iron phosphate (LFP), lithium manganese phosphate (LMP), lithium manganese iron phosphate (LMFP), and the like or a spinel crystal structure such as lithium manganese oxide (LMO) and the like has a limitation in realizing high capacity due to a small available lithium amount within the structure. The layered lithium-nickel-manganese-aluminium-based positive electrode active material has excellent capacity and efficiency characteristics due to the high available lithium amount in the structure, making it suitable as a material for high-capacity batteries. However, as cobalt, which plays a key role in the layered structure, is removed, structural stability decreases, resistance (e.g., electrical resistance) increases, and it becomes difficult to secure long cycle-life characteristics. The layered lithium-nickel-manganese-aluminium-based positive electrode active material, from which cobalt is excluded, may have a problem of accelerated side reaction with an electrolyte under high-voltage and high-temperature conditions, resultantly increasing gas generation and deteriorating cycle-life characteristics.

Accordingly, in order to maintain a stable layered structure even if the cobalt element is excluded from the structure of the layered lithium-nickel-manganese-aluminium-based positive electrode active material and to improve stability in a high-voltage region, in some embodiments, zirconium, a heterogeneous element, is doped into a layered lithium-nickel-manganese-aluminium-based positive electrode active material to improve not only high-voltage, high-temperature cycle-life characteristics but also initial charge and discharge efficiency.

### Core Particles

The core particles include the zirconium-doped layered lithium nickel-manganese-aluminium-based composite oxide.

A nickel content in the zirconium-doped layered lithium nickel-manganese-aluminium-based composite oxide may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of a total metal excluding lithium in the positive electrode active material (e.g., the zirconium-doped layered lithium nickel-manganese-aluminium-based composite oxide). If the nickel content in the zirconium-doped layered lithium nickel-manganese-aluminium-based composite oxide satisfies the above ranges, high capacity may be achieved and structural stability may be increased even if the cobalt content is reduced. The nickel is included in the core particles, but may move to some of the coating layers during the coating process, and therefore, the nickel content may refer to a nickel content included in the entire positive electrode active material.

A manganese content in the zirconium-doped layered lithium nickel-manganese-aluminium-based composite oxide may be, for example, greater than or equal to about 10 mol%, for example, about 10 mol% to about 40 mol%, about 10 mol% to about 38 mol%, about 15 mol% to about 35 mol%, about 15 mol% to about 30 mol%, or about 20 mol% to about 30 mol% based on 100 mol% of a total metal excluding lithium in the positive electrode active material (e.g., the zirconium-doped layered lithium nickel-manganese-aluminium-based composite oxide). If the manganese content in the zirconium-doped layered lithium nickel-manganese-aluminium-based composite oxide satisfies the above ranges, the positive electrode active material may improve structural stability while realizing high capacity. The manganese is included in the core particles, but may move to some of the coating layers during the coating process, and therefore, the manganese content may refer to a manganese content included in the entire positive electrode active material.

An aluminium content in the zirconium-doped layered lithium nickel-manganese-aluminium-based composite oxide based on 100 mol% of a total metal excluding lithium of the positive electrode active material (e.g., the zirconium-doped layered lithium nickel-manganese-aluminium-based composite oxide) may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol%. Herein, the aluminium content refers to a content of aluminium present in the core particle. If the aluminium content satisfies the above ranges, a stable layered structure may be maintained even if cobalt is excluded from the core particles, the problem of structure collapse due to charging and discharging may be suppressed or reduced, and long cycle-life characteristics of the positive electrode active material may be realized.

According to some embodiments, the concentration of aluminium within the core particle may be uniform (or substantially uniform). In embodiments, the foregoing means that there is not a concentration gradient of aluminium from a center to a surface of the core particle, or that the aluminium concentration in an internal portion of the core particle is neither higher nor lower than in an external portion of the core particle, and that the aluminium within the core particle is evenly (or substantially evenly) distributed. This may be a structure obtained by using an aluminium raw material during precursor production without additional doping of aluminium during the synthesis of the core particles and thereby synthesizing a composite oxide using nickel-manganese-aluminium-based hydroxide as a precursor. The core particles may be in a form of a secondary particle in which a plurality of primary particles are agglomerated, and the aluminium content inside the primary particle may be the same or similar regardless of a location of the primary particle. For example, if a primary particle is selected at a random position in a cross-section of a secondary particle and the aluminium content is measured inside the primary particle rather than at its interface, regardless of the location of the primary particle, for example, whether the primary particle is close to the center of the secondary particle or close to the surface of the secondary particle, the aluminium content may be the same/similar/uniform. In this structure, a stable layered structure can be maintained even if cobalt is absent or is present in a very small amount, and aluminium by-products and/or aluminium aggregates are not generated, so that the capacity, efficiency, and cycle-life characteristics of the positive electrode active material can be improved at the same (or substantially the same) time.

A zirconium content in the zirconium-doped layered lithium nickel-manganese-aluminium-based composite oxide based on 100 mol% of a total metal excluding lithium in the positive electrode active material (e.g., the zirconium-doped layered lithium nickel-manganese-aluminium-based composite oxide) is about 0.2 mol% to about 0.8 mol%, for example, about 0.2 mol% to about 0.7 mol%, about 0.2 mol% to about 0.6 mol%, or about 0.2 mol% to about 0.5 mol%. If the zirconium content in the zirconium-doped layered lithium nickel-manganese-aluminium-based composite oxide satisfies the above ranges, a stable layered structure can be maintained even if cobalt is excluded, a problem of structure collapse due to charging and discharging may be suppressed or reduced, long cycle-life characteristics of the positive electrode active material may be realized, and for example, the initial discharge capacity and initial charge/discharge efficiency under high-voltage driving conditions may be improved, and high-temperature cycle-life characteristics may be improved.

The zirconium-doped layered lithium nickel-manganese-aluminium-based composite oxide may be, for example, represented by Chemical Formula 1.

Chemical Formula 1 Liₐ₁Niₓ₁Mn_{y1}Al_{z1}Zrᵥ₁M¹_{w1}O_{2-b1}X_{b1}

In Chemical Formula 1, 0.9≤a1≤1.8, 0.6≤x1≤0.8, 0.1≤y1≤0.38, 0.01≤z1≤ 0.03, 0.002≤v1≤0.008, 0≤w1≤0.2, 0.9≤x1+y1+z1+v1+w1≤1.1, and 0≤b1≤0.1, M¹ is one or more elements selected from B, Ba, Ca, Ce, Cr, Fe, Mg, Mo, Nb, Si, Sn, Sr, Ti, V, W, Y and Zn, and X is one or more elements selected from F, P, and S.

In the above Chemical Formula 1, for example, 0.9≤a1≤1.5, or 0.9≤a1≤1.2. In embodiments, 0.6≤x1≤0.79, 0.6≤x1≤0.78, 0.6≤x1≤0.75, 0.65≤x1≤0.8, or 0.7≤x1≤ 0.79, 0.1≤y1≤0.35, 0.1≤y1≤0.30, 0.1≤y1≤0.29, 0.15≤y1≤0.29, or 0.2≤y1≤0.3, 0.01≤ z1≤0.025, 0.01<z1≤0.02, or 0.01<z1≤0.019, 0.002≤v1≤0.007, 0.002≤v1≤0.006, or 0.002≤v1≤0.005, and 0≤w1≤0.15, 0≤w1≤0.1, or 0≤w1≤0.09.

The zirconium-doped layered lithium nickel-manganese-aluminium-based composite oxide may be a cobalt-free compound that does not include cobalt or includes a very small amount, and has a cobalt content of about 0 mol% to about 0.01 mol% based on 100 mol% of a total metal excluding lithium in the zirconium-doped layered lithium nickel-manganese-aluminium-based composite oxide. In embodiments, the zirconium-doped layered lithium nickel-manganese-aluminium-based composite oxide may have a cobalt content of 0 mol% based on 100 mol% of a total metal excluding lithium in the zirconium-doped layered lithium nickel-manganese-aluminium-based composite oxide.

The core particles are in the form of secondary particles made by agglomerating a plurality of primary particles. The secondary particles may be spherical, elliptical, polyhedral, and/or irregular in shape and the primary particles may be spherical, elliptical, plate-shaped, or a combination thereof. The average particle diameter (D₅₀) of the secondary particles is about 10 µm to about 25 µm, for example, about 11 µm to about 20 µm, or about 12 µm to about 18 µm. As used herein, if a definition is not otherwise provided, the average particle diameter (D₅₀) means a diameter of particles having a cumulative volume of 50 volume% in the particle size distribution that is obtained by measuring the size (diameter or major axis length) of about 20 particles at random in a scanning electron microscope image for positive electrode active materials. If the average particle diameter of the core particles satisfies the above ranges, high capacity and long cycle-life may be realized and it may be suitable or desirable to form a coating layer according to some embodiments.

The core particle is susceptible to chemical attacks from components in an electrolyte, if a battery is operated under high-voltage or high-temperature conditions, and thus may have many side reactions with the electrolyte, resulting in increasing an amount of gas generation and thereby, deteriorating battery cycle-life and safety, but these problems may be addressed by introducing a coating layer according to some embodiments which will be further described herein below, thereinto.

### Coating Layer

The positive electrode active material according to some embodiments includes core particles including the zirconium-doped layered lithium nickel-manganese-aluminium-based composite oxide; and a coating layer on the surface of the core particle and including aluminium, wherein the core particle is a secondary particle formed by agglomerating a plurality of primary particles, an average particle diameter (D50) of the secondary particles is about 10 µm to about 25 µm, and in the zirconium-doped layered lithium nickel-manganese-aluminium-based composite oxide, a zirconium content is about 0.2 mol% to about 0.8 mol% based on 100 mol% of a total metal excluding lithium in the zirconium-doped layered lithium nickel-manganese-aluminium-based composite oxide. The core particles have been described above, and thus description thereof will not be repeated here and the coating layer will be described.

The aluminium content in the coating layer may be about 0.5 mol% to about 1.5 mol%, for example, about 0.5 mol% to about 1.3 mol%, about 0.6 mol% to about 1.1 mol%, or about 0.7 mol% to about 0.9 mol% based on 100 mol% of a total metal excluding lithium in the positive electrode active material. The aluminium content of the coating layer refers only to a content of aluminium included in the coating layer, regardless of the aluminium included in the core particles. The aluminium content in the coating layer of the entire positive electrode active material may be measured, for example, through scanning electron microscopy-energy-dispersive X-ray spectroscopy (SEM-EDS) analysis of the surface or cross-section of the positive electrode active material. If the aluminium content in the coating layer satisfies the above ranges, the coating layer may have a uniform (or substantially uniform) and thin thickness, which may not increase resistance (e.g., electrical resistance) of the positive electrode active material and effectively suppress or reduce a side reaction with the electrolyte and thereby, improving cycle-life characteristics of a rechargeable lithium battery under high-voltage and high-temperature conditions. For example, if the aluminium content of the coating layer is excessive, a uniform coating layer may not be formed or resistance (e.g., electrical resistance) may increase, which may reduce charge/discharge efficiency and cycle-life characteristics, and if the aluminium content of the coating layer is too small, a coating layer of a suitable or appropriate thickness is not formed and an effect of suppressing or reducing side reactions with the electrolyte may be reduced.

The coating layer according to some embodiments may be, for example, in the form of a film that continuously surrounds the surface of the core particle, or may be in the form of a shell that surrounds the entire surface of the core particle. This is distinct from a structure in which only a portion of the surface of the core particle is coated. According to some embodiments, the coating layer may be formed to entirely cover the surface of the core particle and may be formed to be very thin and uniform (or substantially uniform) in thickness, and therefore the positive electrode active material does not (or substantially does not) increase resistance (e.g., electrical resistance) or decrease capacity, improves structural stability, effectively suppresses or reduces side reactions with electrolytes, reduces the amount of gas generated under high-voltage and high-temperature conditions, and achieves long cycle-life characteristics.

For example, the coating layer may include a fiber shape, for example, a mesh shape and/or a spider web shape. A mesh-shaped coating layer may be formed on the entire surface of the core particle, and thus it can be understood that the coating layer surrounds the entire surface of the core particle. This is distinct from a structure in which only a portion of the surface of the core particle is coated. The coating layer may be formed with a very thin and uniform (or substantially uniform) thickness while having a fiber shape. As a result, the positive electrode active material does not (or substantially does not) increase resistance (e.g., electrical resistance) or decrease capacity, improves structural stability, effectively suppresses or reduces side reactions with electrolytes, reduces the amount of gas generated under high-voltage and high-temperature conditions, and realizes long cycle-life characteristics.

The coating layer according to some embodiments may have a thickness of about 30 nm to about 500 nm, for example, about 30 nm to about 450 nm, about 30 nm to about 400 nm, about 30 nm to about 350 nm, about 30 nm to about 300 nm, about 30 nm to about 250 nm, about 30 nm to about 200 nm, about 30 nm to about 150 nm, about 50 nm to about 500 nm, about 80 nm to about 500 nm, or about 100 nm to about 500 nm. If the coating layer satisfies the above thickness ranges, the structural stability of the positive electrode active material may be improved without increasing resistance (e.g., electrical resistance) or reducing capacity due to the coating, and the side reaction with the electrolyte may be effectively suppressed or reduced. The thickness of the coating layer may be measured through, for example, time-of-flight secondary ion mass spectrometry (TOF-SIMS), X-ray photoelectron spectroscopy (XPS), or energy-dispersive X-ray spectroscopy (EDS) analysis, and the thickness range of the coating layer may be measured through transmission electron microscopy-energy-dispersive X-ray spectroscopy (TEM-EDS) line profile.

The coating layer according to some embodiments is characterized by being thin and uniform (or substantially uniform) in thickness, at the level of tens to hundreds of nanometers. For example, the deviation in coating layer thickness in one positive electrode active material particle may be less than or equal to about 20%, less than or equal to about 18%, or less than or equal to about 15%. Herein, the deviation in coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the above ranges means that a coating layer of uniform (or substantially uniform) thickness is formed in a form of a good film on the surface of the positive electrode active material particle. Accordingly, the structural stability of the positive electrode active material is improved, side reactions with the electrolyte may be effectively suppressed or reduced, and the increase in resistance (e.g., electrical resistance) or decrease in capacity due to coating may be minimized or reduced.

The coating layer may include, for example, a layered aluminium compound, for example, aluminium oxide, lithium-aluminium oxide (e.g., LiAlO₂), or a combination thereof.

In embodiments, the coating layer may further include nickel, manganese, or a combination thereof in addition to aluminium. The nickel and manganese may be included in the core particles and may be introduced during the coating layer formation process, and their contents are not particularly limited. The coating layer according to some embodiments includes aluminium while optionally including nickel and manganese, and is formed to be thin and uniform (or substantially uniform) in thickness, thereby improving the high-voltage characteristics of the positive electrode active material and improving the cycle-life characteristics.

On the surface of the positive electrode active material according to some embodiments, an Al content based on 100 wt% of a total metal excluding lithium in the positive electrode active material may be about 45 wt% to about 55 wt%, and by being coated with Al at such a high content, structural stability of the positive electrode active material may be further improved. The Al content on the surface of the positive electrode active material can be measured, for example, through energy dispersive spectroscopy (EDS).

In embodiments, the coating layer may further include sulfur in addition to aluminium. The sulfur may be introduced during the process of adding aluminium sulfate among the aluminium raw materials used to form the aluminium coating layer, and its content is not particularly limited. The coating layer according to some embodiments includes aluminium and optionally includes sulfur, and can improve the high-voltage characteristics and cycle-life characteristics of the positive electrode active material.

The cobalt content in the positive electrode active material according to some embodiments may be, for example, less than or equal to about 0.01 mol%, less than or equal to about 0.005 mol%, or less than or equal to about 0.001 mol%, for example, about 0 mol% to about 0.01 mol%, about 0 mol% to about 0.005 mol%, or about 0 mol% to about 0.001 mol% based on 100 mol% of a total metal excluding lithium in the positive electrode active material.

In some embodiments, the positive electrode active material may not include sodium. In general, sodium ions can be used in the preparing process of a positive electrode active material, but according to the preparing method further described herein below, core particles having a stable structure and a coating layer of uniform (or substantially uniform) thickness can be formed without using sodium ions.

### Method of Preparing Positive Electrode Active Material

In some embodiments, a method of preparing a positive electrode active material includes mixing together a nickel-manganese-aluminium-based composite hydroxide, a zirconium raw material, and a lithium raw material and performing a heat treatment, wherein a zirconium content of the zirconium raw material is about 0.2 mol% to about 0.8 mol%, based on 100 mol% of a total metal of the nickel-manganese-aluminium-based composite hydroxide and zirconium of the zirconium raw material.

The nickel-manganese-aluminium-based composite hydroxide may be a precursor of core particles, may be in the form of secondary particles in which a plurality of primary particles are agglomerated, may not include cobalt or may include a very small amount of cobalt, and may be, for example, a cobalt-free nickel-manganese-aluminium-based composite hydroxide. The nickel-manganese-aluminium-based composite hydroxide may be prepared by a general coprecipitation method.

The nickel content in the nickel-manganese-aluminium-based composite hydroxide may be greater than or equal to about 60 mol%, for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal in the nickel-manganese-aluminium-based composite hydroxide. If the nickel content in the nickel-manganese-aluminium-based composite hydroxide satisfies the above ranges, high capacity may be achieved and structural stability may be increased even if the cobalt content is reduced.

The manganese content in the nickel-manganese-aluminium-based composite hydroxide may be greater than or equal to about 10 mol%, for example, about 10 mol% to about 40 mol%, about 15 mol% to about 35 mol%, about 15 mol% to about 30 mol%, or about 20 mol% to about 30% based on 100 mol% of a total metal in the nickel-manganese-aluminium-based composite hydroxide. If the manganese content in the nickel-manganese-aluminium-based composite hydroxide satisfies the above ranges, high capacity may be realized while structural stability of the positive electrode active material may be increased, and a production price may be lowered to increase economic efficiency.

The aluminium content in the nickel-manganese-aluminium-based composite hydroxide may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol% based on 100 mol% of a total metal in the nickel-manganese-aluminium-based composite hydroxide. If the aluminium content in the nickel-manganese-aluminium-based composite hydroxide satisfies the above ranges, high capacity may be realized while structural stability of the positive electrode active material may be increased, and the production price may be lowered to increase economic efficiency.

In a method for preparing a positive electrode active material according to some embodiments, in the preparation of core particles, aluminium is not additionally doped, but an aluminium raw material may be used to prepare a precursor, so that a nickel-manganese-aluminium-based composite hydroxide, in which aluminium is uniformly (or substantially uniformly) dispersed in the structure, is used as the precursor. If such a precursor is used, the positive electrode active material may stably maintain a layered structure without cobalt despite repeated charges and discharges, and aluminium byproducts and/or aluminium aggregates may not be formed, thereby improving capacity and efficiency characteristics and cycle-life characteristics of the positive electrode active material.

In the nickel-manganese-aluminium-based composite hydroxide, the cobalt content may be less than or equal to about 0.01 mol%, less than or equal to about 0.005 mol%, or less than or equal to about 0.001 mol%, based on 100 mol% of a total metal in the nickel-manganese-aluminium-based composite hydroxide. This nickel-manganese-aluminium-based composite hydroxide may be economical as it avoids the increase in unit cost caused by cobalt, maximizes or increases capacity, and improves structural stability.

For example, the nickel-manganese-aluminium-based composite hydroxide may be represented by Chemical Formula 2.

Chemical Formula 2 Niₓ₂Mn_{y2}Al_{z2}M²_{w2}(OH)₂

In Chemical Formula 2, 0.6≤x2≤0.8, 0.1≤y2≤0.4 0<z2≤0.03, 0≤w2≤0.2, and 0.9≤x2+y2+z2+w2≤1.1, and M² is one or more elements selected from B, Ba, Ca, Ce, Cr, Fe, Mg, Mo, Nb, Si, Sn, Sr, Ti, V, W, Y and Zn.

In Chemical Formula 2, for example, 0.6≤x2≤0.8, 0.1≤y2≤0.39, 0.01≤z2≤ 0.03, and 0≤w2≤0.19.

The nickel-manganese-aluminium-based composite hydroxide is in the form of particles, and the average particle diameter (D₅₀) of the particles may be about 10 µm to about 25 µm, about 11 µm to about 20 µm, or about 12 µm to about 18 µm.

For example, the zirconium raw material may be zirconium oxide.

The nickel-manganese-aluminium-based composite hydroxide and the zirconium raw material may be mixed together at a molar ratio of about 1:0.001 to 1:0.1, for example, about 1:0.001 to 1:0.01.

The heat treatment may be performed under an oxygen atmosphere, for example, within a temperature range of about 750 °C to about 950 °C, about 780 °C to about 900 °C, or about 810 °C to about 890 °C for about 2 hours to about 20 hours or about 4 hours to about 12 hours. Through the above heat treatment, the zirconium-doped layered lithium nickel-manganese-aluminium-based composite oxide may be obtained. The obtained zirconium-doped layered lithium nickel-manganese-aluminium-based composite oxide may include about 0.2 mol% to about 0.8 mol% of zirconium and about 60 mol% to about 80 mol% of nickel, and does not include cobalt or includes cobalt in a very small amount of less than or equal to about 0.01 mol% based on 100 mol% of a total metal excluding lithium of the zirconium-doped layered lithium nickel-manganese-aluminium-based composite oxide. Because the zirconium-doped layered lithium nickel-manganese-aluminium-based composite oxide may have significantly different residual lithium contents on the particle surface and different various characteristics from oxides having a different composition, for example, other nickel-based oxides such as lithium nickel-cobalt-manganese-based composite oxide, lithium nickel-cobalt-aluminium-based composite oxide, etc., it may be impossible to form a suitable or satisfactory coating layer in the form of a uniform film utilizing other coating methods. In some embodiments, a method is proposed to improve high-voltage and high-temperature characteristics by uniformly (or substantially uniformly) forming a coating layer having a very thin thickness on the surface of the lithium nickel-manganese-aluminium-based composite oxide including a very small amount of cobalt and a nickel content of greater than or equal to about 60 mol%.

In some embodiments, a coating solution is first prepared by adding an aluminium raw material to an aqueous solvent, the obtained the zirconium-doped layered lithium nickel-manganese-aluminium-based composite oxide is added and mixed and then drying and a second heat treatment are performed to form a coating layer according to some embodiments. The foregoing is a salt-solution wet coating method and can be referred to as a pre-addition method in which the salt, which is the coating raw material, is first completely dissolved and then the core particles of the positive electrode active material (e.g., the zirconium-doped layered lithium nickel-manganese-aluminium-based composite oxide) are added.

The aqueous solvent may include distilled water, alcohol-based solvent, or a combination thereof. For example, the aluminium raw material may be aluminium sulfate. The aluminium sulfate may be a suitable or optimal raw material for forming a uniform (or substantially uniform) coating layer including aluminium on the layered lithium nickel-manganese-aluminium-based composite oxide. The aluminium raw material is a raw material that forms a coating layer, and the aluminium content in the aluminium raw material may be designed to be about 0.5 mol% to about 1.5 mol%, for example, about 0.5 mol% to about 1.3 mol%, about 0.6 mol% to about 1.1 mol%, or about 0.7 mol% to about 0.9 mol% based on 100 mol% of a total metal excluding lithium in the finally obtained positive electrode active material. If the aluminium contents of the coating raw materials are designed within the above ranges, the coating layer may be formed to have a thin and uniform (or substantially uniform) thickness of tens to hundreds of nanometers, reducing an amount of gas generated by rechargeable lithium batteries under high-voltage or high-temperature operation conditions and improving high-capacity and long cycle-life characteristics.

The coating solution obtained by mixing the aluminium raw material in the aqueous solvent may have a pH of about 1.5 to about 3.5, for example, about 2.0 to about 3.4, about 2.5 to about 3.3, about 2.7 to about 3.3, or about 2.9 to about 3.2.

The adding and mixing of the core particles of the positive electrode active material to the coating solution may be performed for about 5 minutes to about 80 minutes, about 5 minutes to about 60 minutes, or about 5 minutes to about 40 minutes. The pH of the resultant mixed solution after stirring may be about 4.5 to about 8.5, for example, about 5.0 to about 8.0, about 5.5 to about 7.5, or about 6.0 to about 7.0. If the above conditions are satisfied, it is suitable or desirable to form a coating layer having uniform (or substantially uniform) thickness.

The drying after the mixing process may be understood as a process of removing the solvent, and may be performed, for example, at about 40 °C to about 240 °C, about 100 °C to about 220 °C, or about 150 °C to about 200 °C.

If the heat treatment by mixing together the nickel-manganese-aluminium-based composite hydroxide, zirconium raw material, and lithium raw material is expressed as a first heat treatment, the heat treatment after drying the product obtained by removing the solvent from the mixed solution may be referred to as a second heat treatment. The second heat treatment may be understood as a process of forming a coating layer, for example, in an oxygen atmosphere at a temperature range of about 700 °C to about 850 °C, about 750 °C to about 840 °C, or about 800 °C to about 830 °C for about 2 to about 20 hours, or about 3 to about 10 hours. In embodiments, the second heat treatment temperature may be lower than the first heat treatment temperature, and the second heat treatment time may be the same as or shorter than the first heat treatment time. A suitable or desired coating layer can be obtained by performing a second heat treatment under the above conditions.

### Positive Electrode

In some embodiments, a positive electrode includes a positive electrode current collector and a positive electrode active material layer on the positive electrode current collector, wherein the positive electrode active material layer includes the aforementioned positive electrode active material. The positive electrode active material layer may further include other types (or kinds) of positive electrode active materials in addition to the aforementioned positive electrode active materials. In embodiments, the positive electrode active material layer may optionally further include a binder, a conductive material (e.g., an electrically conductive material), or a combination thereof.

According to some embodiments, a loading level of the positive electrode active material layer may be about 10 mg/cm² to about 40 mg/cm², for example, about 10 mg/cm² to about 30 mg/cm², or about 10 mg/cm² to about 20 mg/cm². In embodiments, a density of the positive electrode active material layer in the final compressed positive electrode may be about 3.3 g/cc to about 3.7 g/cc, for example, about 3.3 g/cc to about 3.6 g/cc or about 3.4 g/cc to about 3.58 g/cc. If applying the positive electrode active material according to some embodiments, it is beneficial to implement such a loading level and density of the positive electrode active material layer, and a positive electrode in which the loading level and the density of the positive electrode active material layer satisfy the above ranges is suitable to implement a high-capacity, high-energy-density rechargeable lithium battery.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material is included to provide electrode conductivity (e.g., electrical conductivity) and any suitable electrically conductive material may be used as a conductive material unless it causes a chemical change (e.g., an undesirable chemical change in the rechargeable lithium battery). Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminium, silver, and the like; a conductive polymer (e.g., an electrically conductive polymer) such as a polyphenylene derivative; or a mixture thereof.

Each content of the binder and the conductive material may be about 0.5 wt% to about 5 wt% based on 100 wt% of the positive electrode active material layer.

The positive electrode current collector may include Al foil, but is not limited thereto.

### Rechargeable Lithium Battery

Some embodiments provide a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte.

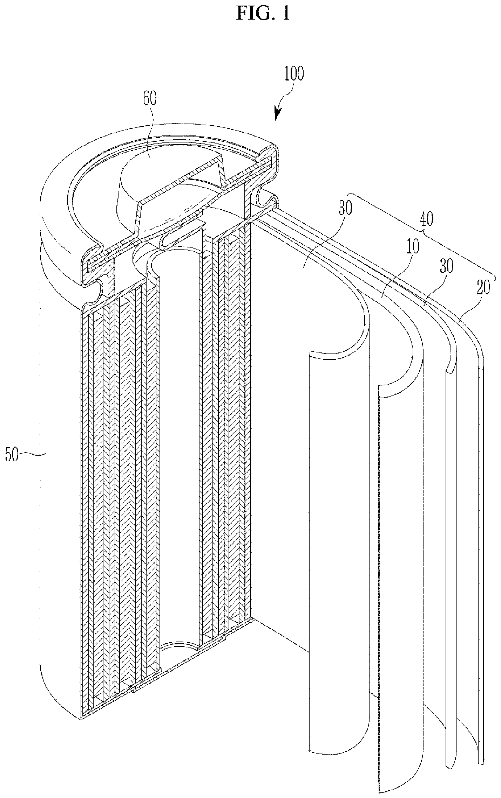

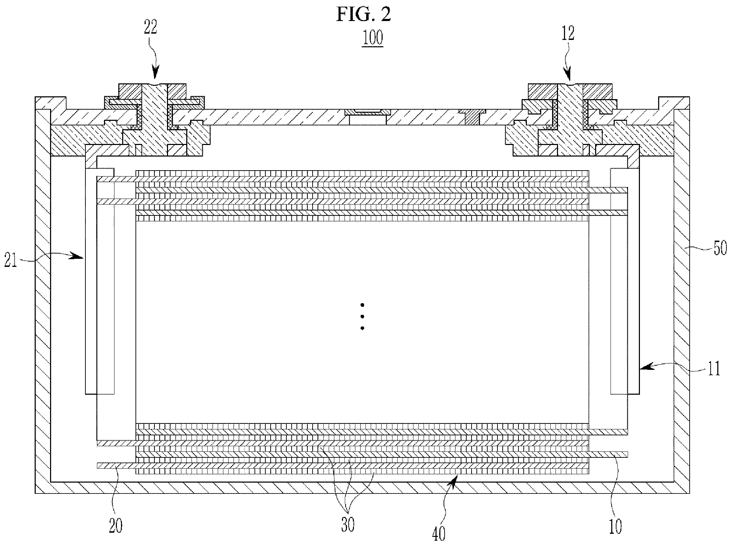

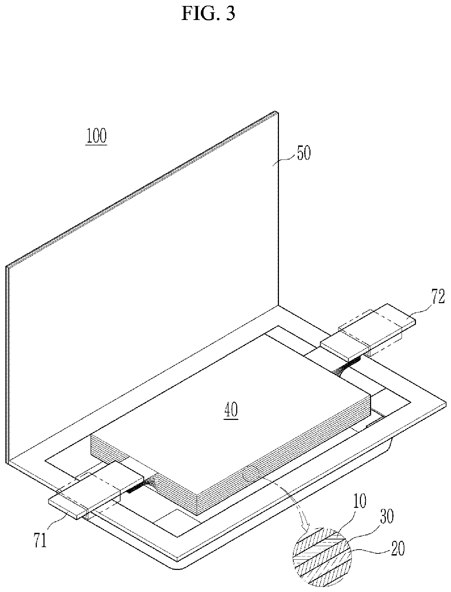

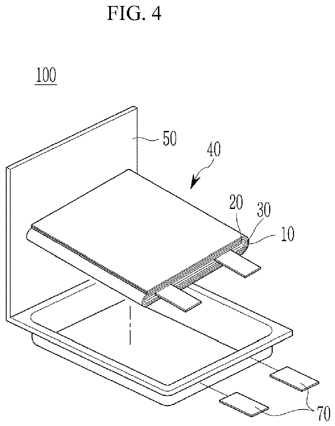

The rechargeable lithium battery may be classified into cylindrical, prismatic, pouch, coin, etc. depending on the shape. FIGS. 1-4 are schematic diagrams showing rechargeable lithium batteries according to some embodiments, where FIG. 1 is a cylindrical battery, FIG. 2 is a prismatic battery, and FIGS. 3-4 are each a pouch-shaped battery. Referring to FIGS. 1-4, the rechargeable lithium battery 100 includes an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with an electrolyte. The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12, a negative lead tab 21, and a negative electrode terminal 22. As shown in FIGS. 3-4, the rechargeable lithium battery 100 includes an electrode tab 70 (FIG. 4), for example, a positive electrode tab 71 and a negative electrode tab 72 (FIG. 3) that serve as an electrical path for inducing the current formed in the electrode assembly 40 to the outside.

The rechargeable lithium battery according to some embodiments may be rechargeable at a high voltage and/or may be suitable for being driven at a high voltage. For example, the charging voltage of a rechargeable lithium battery may be greater than or equal to about 4.45 V, about 4.45 V to about 4.7 V, about 4.45 V to about 4.6 V, or about 4.45 V to about 4.55 V, etc. By applying the positive electrode active material according to some embodiments, the rechargeable lithium battery can significantly reduce an amount of gas generated even if charged at high voltage and can achieve high capacity and long cycle-life characteristics.

### Negative Electrode

The negative electrode may include a current collector and a negative electrode active material layer on the current collector, and the negative electrode active material layer may include a negative electrode active material, and may further include a binder, a conductive material (e.g., an electrically conductive material), or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example, crystalline carbon, amorphous carbon, or a combination thereof as a carbon-based negative electrode active material. The crystalline carbon may be irregular, and/or sheet, flake, spherical, and/or fiber shaped natural graphite and/or artificial graphite. The amorphous carbon may be a soft carbon, a hard carbon, a mesophase pitch carbonization product, calcined coke, and/or the like.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (0 < x ≤ 2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnOₓ ( 0<x≤2, e.g., SnO₂), a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surface of the silicon particles. For example, the silicon-carbon composite may include a secondary particle (core) in which silicon primary particles are assembled and an amorphous carbon coating layer (shell) on a surface of the secondary particle. The amorphous carbon may also be between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon, hard carbon, a mesophase pitch carbonized product, and/or calcined coke.

If the silicon-carbon composite includes silicon and amorphous carbon, a content of silicon may be about 10 wt% to about 50 wt% and a content of amorphous carbon may be about 50 wt% to about 90 wt% based on 100 wt% of the silicon-carbon composite. In embodiments, if the composite includes silicon, amorphous carbon, and crystalline carbon, a content of silicon may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

In embodiments, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, and/or in an oxidized form. The oxidized form of silicon may be represented by SiOₓ (0<x≤2). In embodiments, the atomic content ratio of Si:O, which indicates a degree of oxidation, may be about 99:1 to about 33:67. As used herein, if a definition is not otherwise provided, an average particle diameter (D₅₀) indicates a particle where an accumulated volume is about 50 volume% in a particle distribution.

The Si-based negative electrode active material and/or Sn-based negative electrode active material may be mixed together with the carbon-based negative electrode active material. If the Si-based negative electrode active material and/or Sn-based negative electrode active material and the carbon-based negative electrode active material are mixed together and used, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If an aqueous binder is used as the negative electrode binder, a cellulose-based compound capable of imparting or increasing viscosity may be further included. As the cellulose-based compound, one or more of carboxymethyl cellulose, hydroxypropylmethyl cellulose, methyl cellulose, and alkali metal salts thereof may be mixed and used. The alkali metal may be Na, K, and/or Li.

The dry binder may be a polymer material capable of becoming fiber (e.g., capable of being fiberized or fibrillized), and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity (e.g., electrical conductivity) and any suitable electrically conductive material may be used as a conductive material unless it causes a chemical change (e.g., an undesirable chemical change in the rechargeable lithium battery). Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminium, silver, and the like; a conductive polymer (e.g., an electrically conductive polymer) such as a polyphenylene derivative; or a mixture thereof.

A content of the negative electrode active material may be about 95 wt% to about 99.5 wt% based on 100 wt% of the negative electrode active material layer, and a content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material based on 100 wt% of the negative electrode active material layer.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof, and/or may be in the form of a foil, sheet, and/or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte, which may include a non-aqueous organic solvent and a lithium salt.

The non-aqueous organic solvent serves as a medium that transmits ions taking part in the electrochemical reaction of a battery. The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether group, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (or kinds), and if two or more types (or kinds) are used in a mixture, a mixing ratio can be suitably or appropriately adjusted according to a suitable or desired battery performance, which should be readily recognizable to those of ordinary skill in the art upon reviewing this disclosure.

If using a carbonate-based solvent, a cyclic carbonate and a chain carbonate may be mixed together and used, and the cyclic carbonate and the chain carbonate may be mixed together in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed together and used in a volume ratio of about 1:1 to about 30:1.

The electrolyte may further include vinylethylene carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of the lithium salt may be within the range of about 0.1 M to about 2.0 M. If the concentration of lithium salt is within the above range, the electrolyte may have suitable or appropriate ionic conductivity and viscosity, and thus excellent performance can be achieved and lithium ions can move effectively.

### Separator

Depending on the type (or kind) of the rechargeable lithium battery, a separator may be between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film including any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed together in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following examples are only examples of embodiments of the present disclosure, and the present disclosure is not limited to the following examples.

### Example 1

### 1. Preparation of Positive Electrode Active Material

Ni_{0.75}Mn_{0.24}Al_{0.01}(OH)₂, LiOH, and ZrO₂ were mixed together at a molar ratio of 1:1:0.002 and subjected to a first heat treatment at 845 °C for 8 hours in an oxygen atmosphere to obtain lithium nickel-manganese-aluminium-based composite oxide having a composition of LiNi_{0.748}Mn_{0.24}Al_{0.01}Zr_{0.002}O₂ and in the form of secondary particles having an average particle diameter (D₅₀) of about 14 µm. In the lithium nickel-manganese-aluminium-based composite oxide, the zirconium content was designed to be 0.2 mol% based on 100 mol% of a total metal excluding lithium in the lithium nickel-manganese-aluminium-based composite oxide.

A coating solution was prepared by adding aluminium sulfate and 600 g of distilled water to a 1 L reactor and then, stirring the resultant mixture at about 350 rpm for about 5 minutes to dissolve the salt (e.g., aluminium sulfate). As the salts were completely dissolved, the resultant coating solution was checked to be colorless and transparent. Subsequently, 500 g of the lithium nickel-manganese-aluminium-based composite oxide was added to the coating solution, which was being stirred, for 1.5 minutes and then, kept being stirred for about 30 minutes. Herein, the aluminium sulfate was designed to have an aluminium content of 0.8 mol% based on 100 mol% of a total metal excluding lithium in a final positive electrode active material.

After removing the solvent from the resultant mixed solution by using an aspirator and filter press, an initial coated product was obtained through vacuum drying at 190 °C.

The initial coated product was subjected to a second heat-treatment at 750 °C for 8 hours under an oxygen atmosphere to obtain the final positive electrode active material.

### 2. Preparation of Rechargeable Lithium Battery Cell

98.5 wt% of the positive electrode active material, 1.0 wt% of a polyvinylidene fluoride binder, and 0.5 wt% of a carbon nanotube conductive material were mixed together to prepare positive electrode active material layer slurry, and the positive electrode active material layer slurry was coated on an aluminium foil current collector and then, dried and compressed to prepare a positive electrode. Herein, a loading level of the positive electrode active material layer was 10 mg/cm², and a density of the positive electrode active material layer in the finally compressed positive electrode was about 3.4 g/cc.

97.5 wt% of a graphite negative electrode active material, 1.5 wt% of carboxymethyl cellulose, and 1 wt% of a styrene butadiene rubber were mixed together in a water solvent to prepare a negative electrode active material layer slurry. The negative electrode active material layer slurry was coated on a copper foil current collector, followed by drying, and compressing to prepare a negative electrode.

Subsequently, the positive electrode was used together with a lithium metal as a counter electrode and a polytetrafluoroethylene separator, and in addition, an electrolyte prepared by dissolving 1 M LiPF₆ in a mixed solvent of ethylene carbonate and dimethyl carbonate in a volume ratio of 3:7 was used to prepare a rechargeable lithium battery cell according to a general method.

### Example 2

A positive electrode active material and a rechargeable lithium battery cell were prepared according to substantially the same manner as in Example 1 except that the aluminium content of the aluminium sulfate was designed to be 1.0 mol% based on 100 mol% of a total metal excluding lithium of the final positive electrode active material.

### Example 3

A positive electrode active material and a rechargeable lithium battery cell were prepared according to substantially the same manner as in Example 2 except that the zirconium content was designed to be 0.5 mol% based on 100 mol% of a total metal excluding lithium of the lithium nickel-manganese-aluminium-based composite oxide in the preparation of the positive electrode active material.

### Example 4

A positive electrode active material and a rechargeable lithium battery cell were prepared according to substantially the same manner as in Example 2 except that the zirconium content was designed to be 0.8 mol% based on 100 mol% of the total metal excluding lithium of the lithium nickel-manganese-aluminium-based composite oxide in the preparation of the positive electrode active material.

### Comparative Example 1

A positive electrode active material and a rechargeable lithium battery cell were prepared according to substantially the same manner as in Example 2 except that the positive electrode active material was prepared without adding ZrO₂, that is, without the zirconium doping process.

### Comparative Example 2

A positive electrode active material and a rechargeable lithium battery cell were prepared according to substantially the same manner as in Example 2 except that the zirconium content was designed to be 0.1 mol% based on 100 mol% of the total metal excluding lithium in the lithium nickel-manganese-aluminium-based composite oxide in the preparation of the positive electrode active material.

### Comparative Example 3

A positive electrode active material and a rechargeable lithium battery cell were prepared according to substantially the same manner as in Example 2 except that the zirconium content was designed to be 1.0 mol% based on 100 mol% of the total metal excluding lithium in the lithium nickel-manganese-aluminium-based composite oxide in the preparation of the positive electrode active material.

### Evaluation Example 1: Zirconium Doping Analysis in Positive Electrode Active Material

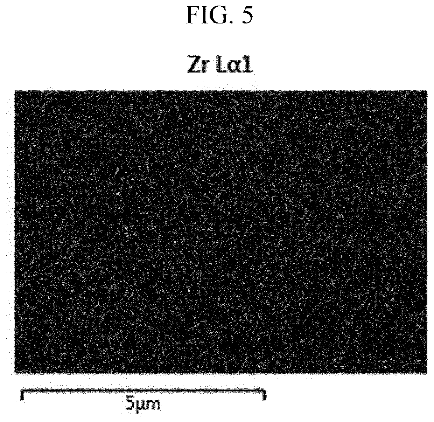

The positive electrode active material of Example 1 was checked with respect to zirconium doping states through SEM-EDS mapping. The SEM-EDS was analyzed using Philips' FEI Titan 80-300 at an acceleration voltage of 15 kV. FIG. 5 is an SEM-EDS image showing Zr on the surface of the final positive electrode active material of Example 1. Referring to FIG. 5, zirconium was doped all over the positive electrode active material, which strengthened structural stability and thereby, improved electrochemical performance at a high voltage.

### Evaluation Example 2: Surface Analysis of Positive Electrode Active Material

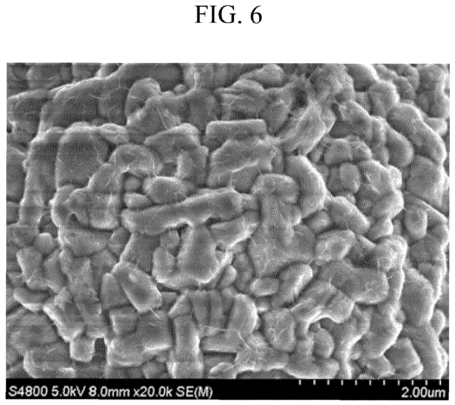

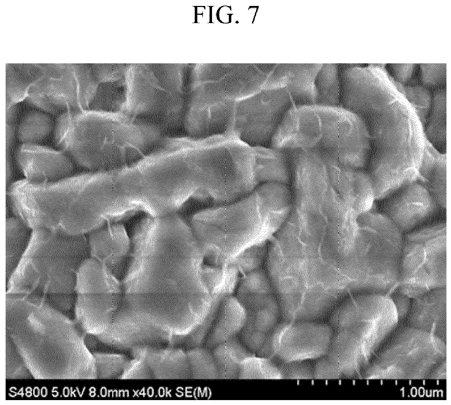

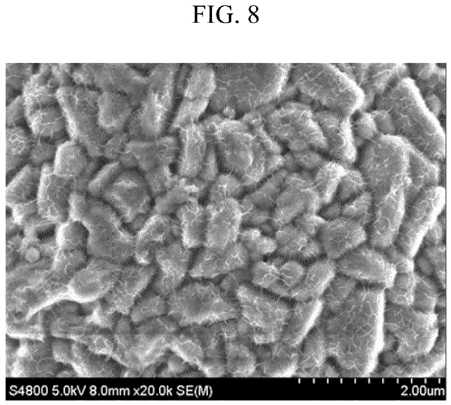

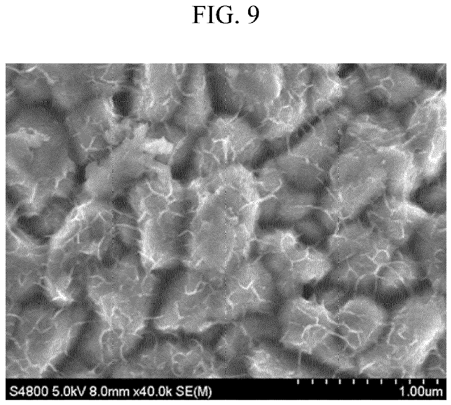

The positive electrode active materials of Examples 1 and 2 were compared by taking a scanning electron microscope (SEM) image. FIG. 6 is an SEM image of a surface of the positive electrode active material prepared in Example 1, and FIG. 7 is an enlarged image thereof. FIG. 8 is an SEM image of a surface of the positive electrode active material prepared in Example 2, and FIG. 9 is an enlarged image thereof. The aluminium coating amount was larger in Example 2 than Example 1, wherein referring to FIGS. 6-9, the larger the aluminium coating amount, the thicker the aluminium coating layer was formed to be on the surface.

### Evaluation Example 3: Evaluation of Initial Charge/Discharge Capacity and Efficiency

The rechargeable lithium battery cells of Examples 1 to 4 and Comparative Examples 1 to 3 were charged to an upper limit voltage of 4.45 V at a constant current of 0.2 C and to 0.05 C at a constant voltage and then, discharged to a cut-off voltage of 3.0 V at 0.2 C at 25 °C for initial charge and discharge. In Table 1, initial charge capacity, initial discharge capacity, and a ratio of the initial discharge capacity to the initial charge capacity as efficiency are provided.

### Evaluation Example 4: High-temperature Cycle-life Characteristics

After the initial charge and discharge in Evaluation Example 3, the cells were 50 cycles or more charged and discharged at 1.0 C within a voltage range of 3.0 V to 4.45 V at 45 °C to calculate a ratio (e.g., high-temperature cycle-life) of 50^{th} cycle discharge capacity to the initial discharge capacity, and the results also are shown in Table 1.

**Table 1**

| | Zr doping (mol%) | Al in the coating layer (mol%) | initial charge capacity (mAh/g) | initial discharge capacity (mAh/g) | Effici ency (%) | High-temperature cycle-life (%, 45 °C, 50 cycles) |
|---|---|---|---|---|---|---|
| Example 1 | 0.2 | 0.8 | 231.7 | 196.9 | 85.0 | 92.0 |
| Example 2 | 0.2 | 1.0 | 229.3 | 195.5 | 85.2 | 90.4 |
| Example 3 | 0.5 | 1.0 | 229.7 | 194.9 | 84.8 | 89.7 |
| Example 4 | 0.8 | 1.0 | 229.9 | 194.3 | 84.5 | 90.6 |
| Comparative Example 1 | - | 1.0 | 229.9 | 194.3 | 84.5 | 84.2 |
| Comparative Example 2 | 0.1 | 1.0 | 229.2 | 197.0 | 85.9 | 87.8 |
| Comparative Example 3 | 1.0 | 1.0 | 230.5 | 193.9 | 84.1 | 88.0 |

Referring to Table 1, Comparative Example 1 having no zirconium doping exhibited inferior high-temperature cycle-life characteristics compared to the examples and the other comparative examples.

Examples 1 to 4 having a zirconium content within a range of 0.2 mol% to 0.8 mol% in the lithium nickel-manganese-aluminium-based composite oxide, compared to Comparative Examples 2 and 3 having the zirconium content out of the above range, exhibited improved high-temperature cycle-life characteristics. In addition, Example 1 having an aluminium content in the coating layer of 0.8 mol% concurrently (e.g., simultaneously) realized high initial charge and discharge capacity, high initial charge and discharge efficiency, and excellent high-temperature cycle-life characteristics.

While the subject matter of this disclosure has been described in connection with what is presently considered to be practical example embodiments, it is to be understood that the disclosure is not limited to the disclosed embodiments. On the contrary, it is intended to cover various modifications and equivalent arrangements included within the scope of the appended claims, and equivalents thereof.

**Description of SymbolsDescription of Symbols**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising:
core particles comprising a zirconium-doped layered lithium nickel-manganese-aluminium-based composite oxide,
wherein, each core particle is a secondary particle formed by agglomerating a plurality of primary particles,
an average particle diameter (D₅₀) of the secondary particles is about 10 µm to about 25 µm, and
in the zirconium-doped layered lithium nickel-manganese-aluminium-based composite oxide, a zirconium content is about 0.2 mol% to about 0.8 mol% based on 100 mol% of a total metal excluding lithium in the zirconium-doped layered lithium nickel-manganese-aluminium-based composite oxide.

2. The positive electrode active material as claimed in claim 1, wherein:
in the zirconium-doped layered lithium nickel-manganese-aluminium-based composite oxide, a nickel content is about 60 mol% to about 80 mol%, a manganese content is greater than or equal to about 10 mol%, and an aluminium content is about 1 mol% to about 3 mol% based on 100 mol% of a total metal excluding lithium in the zirconium-doped layered lithium nickel-manganese-aluminium-based composite oxide.

3. The positive electrode active material as claimed in claim 1 or claim 2, wherein:
a concentration of aluminium in the core particles is uniform.

4. The positive electrode active material as claimed in any one of claims 1 to 3, wherein:
in the zirconium-doped layered lithium nickel-manganese-aluminium-based composite oxide, a cobalt content is about 0 mol% to about 0.01 mol% based on 100 mol% of a total metal excluding lithium in the zirconium-doped layered lithium nickel-manganese-aluminium-based composite oxide.

5. The positive electrode active material as claimed in any one of claims 1 to 4, wherein:
the zirconium-doped layered lithium nickel-manganese-aluminium-based composite oxide is represented by Chemical Formula 1:
Chemical Formula 1 Liₐ₁Niₓ₁Mn_{y1}Al_{z1}Zrᵥ₁M¹_{w1}O_{2-b1}X_{b1}
wherein in Chemical Formula 1, 0.9≤a1≤1.8, 0.6≤x1≤0.8, 0.1≤y1≤0.38, 0.01≤ z1≤0.03, 0.002≤v1≤0.008, 0≤w1≤0.2, 0.9≤x1+y1+z1+v1+w1≤1.1, and 0≤b1≤0.1, M¹ is one or more elements selected from B, Ba, Ca, Ce, Cr, Fe, Mg, Mo, Nb, Si, Sn, Sr, Ti, V, W, and Zn, and X is one or more elements selected from F, P, and S.

6. The positive electrode active material as claimed in any one of claims 1 to 5, wherein:
a coating layer on the surface of the core particle and comprising aluminium is further included.

7. The positive electrode active material as claimed in claim 6, wherein:
an aluminium content in the coating layer is about 0.5 mol% to about 1.5 mol% based on 100 mol% of a total metal excluding lithium in the positive electrode active material.

8. The positive electrode active material as claimed in claim 6 or claim 7, wherein:
(i) the coating layer is in a form of a shell that continuously surrounds the surface of the core particles; and/or
(ii) a thickness of the coating layer is about 30 nm to about 500 nm; and/or
(iii) a deviation of a thickness of the coating layer within one positive electrode active material particle is less than or equal to about 20%.

9. A method of preparing the positive electrode active material, comprising:
mixing together a nickel-manganese-aluminium-based composite hydroxide, a zirconium raw material, and a lithium raw material and performing a heat treatment to obtain a zirconium-doped layered lithium nickel-manganese-aluminium-based composite oxide,
wherein a zirconium content of the zirconium raw material is about 0.2 mol% to about 0.8 mol%, based on 100 mol% of a total metal of the nickel-manganese-aluminium-based composite hydroxide and zirconium of the zirconium raw material.

10. The method as claimed in claim 9, wherein:
(i) in the nickel-manganese-aluminium-based composite hydroxide, a nickel content is about 60 mol% to about 80 mol%, a manganese content is greater than or equal to about 10 mol%, an aluminium content is about 1 mol% to about 3 mol%, and a cobalt content is about 0 mol% to about 0.01 mol% based on 100 mol% of a total metal in the nickel-manganese-aluminium-based composite hydroxide; and/or
the heat treatment is performed at about 750 °C to about 950 °C.

11. A method of preparing a positive electrode active material, comprising:
(i) preparing a positive electrode active material comprising a zirconium-doped layered lithium nickel-manganese-aluminium-based composite oxide through the method for preparing the positive electrode active material as claimed in claim 11;
(ii) adding aluminium raw materials to an aqueous solvent and mixing them to prepare a coating solution;
(iii) adding the zirconium-doped layered lithium nickel-manganese-aluminium-based composite oxide to the coating solution and mixing together to prepare a mixed solution; and
(iv) removing the aqueous solvent from the mixed solution, drying and heat-treating the resulting product to form a coating layer on a surface of the zirconium-doped layered lithium nickel-manganese-aluminium-based composite oxide.

12. The method as claimed in claim 11, wherein:
an aluminium content of the coating layer is about 0.5 mol% to about 1.5 mol% based on 100 mol% of a total metal excluding lithium in the positive electrode active material.

13. A positive electrode, comprising:
a positive electrode current collector, and
a positive electrode active material layer on the positive electrode current collector,
wherein the positive electrode active material layer comprising the positive electrode active material as claimed in any one of claims 1 to 8.

14. The positive electrode as claimed in claim 13, wherein:
(i) the positive electrode active material layer has a loading level of about 10 mg/cm² to about 40 mg/cm²; and/or
(ii) the positive electrode active material layer has a density of about 3.3 g/cc to about 3.7 g/cc.

15. A rechargeable lithium battery, comprising:
the positive electrode as claimed in claim 13 or claim 14;
a negative electrode; and
an electrolyte, optionally wherein:
a charging voltage of the rechargeable lithium battery is greater than or equal to about 4.45 V.
